# EUROPÄISCHE PATENTSCHRIFT

(11) **EP 4 098 586 B1**
(45) Veröffentlichungstag und Bekanntmachung des Hinweises auf die Patenterteilung: **23.07.2025**
(21) Anmeldenummer: 22175274.4
(22) Anmeldetag: 25.05.2022
(51) Int. Cl.: B65F 3/00, B60R 3/02

(54) **TRITTBRETT**
FOOTBOARD
MARCHEPIED

(30) Priorität: 02.06.2021 DE 102021114336
(43) Veröffentlichungstag der Anmeldung: 07.12.2022
(73) Patentinhaber: FAUN Umwelttechnik GmbH & Co. KG, 27711 Osterholz-Scharmbeck (DE)
(72) Erfinder: Coulmont, Philippe, 07130 Soyons (FR)
(74) Vertreter: Regler, Markus Egid

(56) Entgegenhaltungen:
- CN-U- 206 914 239
- DE-A1- 102013 103 882
- DE-U1- 202014 103 270
- US-A1- 2019 315 278

## Beschreibung

Die Erfindung betrifft ein Trittbrett, insbesondere für ein Abfallsammelfahrzeug, mit einer Plattform und einem Rahmen, wobei die Plattform an dem Rahmen um eine Drehachse schwenkbar gelagert ist, so dass sie eine Ruheposition und eine Arbeitsposition einnehmen kann, wobei die Plattform durch einen Antrieb von der Ruheposition in die Arbeitsposition und umgekehrt bringbar ist.

Es ist aus dem Stand der Technik bekannt, dass Trittbretter an Fahrzeugen, insbesondere Abfallsammelfahrzeugen, durch einen Antrieb schwenkbar gelagert sind. Sie werden dabei aus einer Arbeitsposition, in der sie durch Personen besetzt werden können, in eine Ruheposition und wieder zurückbewegt. Hintergrund sind Sicherheitsvorschriften, die vorsehen, dass das Trittbrett in bestimmten Fahrsituationen nicht betretbar sein soll.

Eine Möglichkeit besteht darin, das Trittbrett beziehungsweise dessen Plattform manuell zu bewegen, wie es in der DE 10 2010 025 692 A1 vorgesehen ist. Das ist jedoch unergonomisch und führt zu körperlichen Belastungen der Müllwerker, die vermieden werden sollen.

Die Aktivierung des Antriebs kann automatisch beim Einlegen des Rückwärtsganges bewerkstelligt werden, wie es etwa in der DE 37 29 107 C2 beschrieben ist. Dies kann zu Unfällen führen, wenn das Trittbrett dabei noch besetzt ist.

Alternativ kann der Antrieb durch Drücken eines Schalters aktiviert werden, wobei der Schalter sich an einer für den Müllwerker gut erreichbaren Position befindet, wenn er neben dem Fahrzeug steht. Bewegt der Müllwerker aber einen schweren Abfallbehälter mit beiden Händen, so ist ein Handschalter schwerlich nutzbar.

Aus der US 2019/0315278 A1 geht ein Trittbrett hervor, dessen Plattform schwenkbar gelagert ist, wobei ein kurzzeitiges Auslenken der Plattform aus einer Ruheposition oder Arbeitsposition einen Antrieb aktiviert, der die Plattform in die Arbeitsposition beziehungsweise Ruheposition bewegt. US2019/315278A1 offenbart den Gegenstand des Oberbegriffs von Anspruch 1.

Es ist also die Aufgabe der Erfindung ein Trittbrett zur Verfügung zu stellen, welches die genannten Nachteile im Stand der Technik überwindet. Die Aufgabe wird gelöst durch ein Trittbrett mit den Merkmalen des Anspruchs 1. Weitere vorteilhafte Ausgestaltungen der Erfindung sind Gegenstand der abhängigen Ansprüche 2 bis 13.

Die Erfindung betrifft ein Trittbrett, insbesondere für ein Abfallsammelfahrzeug, mit einer Plattform und einem Rahmen, wobei die Plattform an dem Rahmen um eine Drehachse schwenkbar gelagert ist, so dass sie eine Ruheposition und eine Arbeitsposition einnehmen kann, wobei die Plattform durch einen Antrieb von der Ruheposition in die Arbeitsposition und umgekehrt bringbar ist, dadurch gekennzeichnet, dass der Antrieb automatisch aktivierbar ist, indem die Plattform kurzzeitig aus ihrer Ruheposition oder Arbeitsposition ausgelenkt wird wobei als Antrieb ein Aktuator mit einem Zahnradgetriebe vorgesehen ist und das Zahnradgetriebe zumindest ein Zahnradelement aufweist, das mit einer Drehwelle zum Schwenken der Plattform verbunden ist, um diese zu bewegen, wobei das Zahnradelement einen Durchbruch aufweist, der von einem Zapfen durchgriffen ist und der in eine korrespondierende Tasche in einer Plattformhalterung eingreift, wobei der Durchbruch und/oder die Tasche eine kreisbogenförmige Gestalt hat.

Das Trittbrett nimmt zwei Grundpositionen ein. In einer Ruheposition ist die Plattform nicht durch Personen betretbar. Beispielsweise ist die Plattform dann im Wesentlichen senkrecht nach oben ausgerichtet. In einer Arbeitsposition kann die Plattform von Personen betreten werden. Die Plattform ist mittels einer Plattformhalterung an einem Rahmen befestigt, der wiederum mit dem Fahrzeug verbunden ist.

Die Plattform ist um eine Drehachse schwenkbar an dem Rahmen gelagert, beispielsweise an einer Drehwelle oder über eine gelenkige Verbindung oder auf andere Weise. Es ist ein Antrieb vorgesehen, der die Plattform in die jeweilige Position schwenkt. Dadurch entfällt eine manuelle Betätigung der Plattform des Trittbretts.

Das kurzzeitige Auslenken der Plattform aus der Ruheposition oder der Arbeitsposition erfolgt beispielsweise durch ein Antippen der Plattform mit dem Fuß. Die kurzzeitige Auslenkung wird registriert und daraufhin der Antrieb aktiviert und damit die Plattform bewegt. Die Plattform wirkt gewissermaßen selbst wie ein Schalter. Das ist insbesondere vorteilhaft, wenn der Bediener keine Hand frei hat, um einen Handschalter zu betätigen, etwa weil er einen schweren Müllbehälter mit beiden Händen manövriert. Auch ist eine kurzzeitige Auslenkung der Plattform aus von fast allen Standorten des Bedieners am Heck des Fahrzeugs möglich, im Gegensatz zu einer Aktivierung über Handschalter, der jedes Mal aufgesucht werden muss. Das führt zu einer Erleichterung der Tätigkeit.

Handschalter oder auch eine manuelle Bewegbarkeit der Trittbretter können aber zusätzlich nach wie vor vorgesehen sein.

Als Antrieb ist ein Aktuator, insbesondere ein Elektromotor, mit einem Zahnradgetriebe vorgesehen. Ein Zahnradgetriebe ermöglicht eine einfache Kraftübertragung vom Antrieb auf die Plattform. Ein Elektromotor lässt sich in einfacher Weise in das Bordnetz integrieren und zudem sehr präzise ansteuern.

Die Drehwelle ist mit der Plattform verbunden und dient dazu, die Plattform die Schwenkbewegung ausführen zu lassen. An der Drehwelle angebunden ist ein Zahnradelement. Das Zahnradelement ist bevorzugt ein Kreissegment, dessen Abmessungen von den technischen und baulichen Randbedingungen abhängen. In dieses Zahnradelement greift ein anderes Zahnradelement, Zahnrad oder eine Zahnstange ein, das bzw. die durch den Aktuator angetrieben ist.

Erfindungsmässig weist das Zahnradelement einen Durchbruch auf, der von einem Zapfen durchgriffen ist und der in eine korrespondierende Tasche in einer Plattformhalterung eingreift, wobei der Durchbruch und/oder die Tasche eine kreisbogenförmige Gestalt hat.

Der Mittelpunkt des Kreisbogens, der durch den Durchbruch und/oder die Tasche gebildet ist, fällt mit der Drehachse der Drehwelle zusammen. Der Zapfen, der den Durchbruch durchgreift, ist mit der Plattform verbunden und steht mit dem Zahnradelement in Wirkverbindung und überträgt dessen Bewegung auf die Plattform. Da der Durchbruch und/oder die Tasche aber kreisbogenförmig gestaltet ist, ermöglicht er der Plattform eine vom Aktuator unabhängige Bewegungsfreiheit. Es ist möglich, die Plattform in gewissem Grenzen zu bewegen, ohne den Motor zu nutzen oder zu belasten. Dieses Spiel wird genutzt, um die Plattform kurzzeitig auslenken zu können. Vorteilhafterweise sind elastische Mittel vorgesehen, die die Plattform nach der Auslenkung aus der Ruheposition und/oder Arbeitsposition mittels Federkraft wieder in die Ruheposition und/oder Arbeitsposition zurückführen.

Bevorzugt ist als elastisches Mittel zumindest ein Federelement vorgesehen, das in der Ruheposition und/oder Arbeitsposition als Anschlag wirkt und beim kurzzeitigen Auslenken gespannt wird, so dass die Plattform durch die Rückstellkraft wieder in die Ruheposition und/oder Arbeitsposition bewegbar ist, sobald die Plattform entlastet wird.

Die Arbeitsposition und die Ruheposition sind definierte Stellungen der Plattform relativ zu dem Rahmen. Je nach Stellung ist das Abfallsammelfahrzeug bestimmten Restriktionen unterworfen. So ist eine Fahrt ohne Geschwindigkeitsbeschränkungen oder Beschränkung der Rückwärtsfahrt nur in der Ruheposition möglich, da dann der Bediener aus Sicherheitsgründen nicht auf dem Trittbrett stehen soll. Je nachdem ob das Trittbrett in der Arbeitsposition besetzt oder unbesetzt ist, sind wiederum unterschiedliche Einschränkungen vorgesehen. Ist die Plattform in der Arbeitsposition besetzt, stellt dies zum einen eine dritte definierte Position dar. Gleichzeitig ist das eine Auslenkung aus der Arbeitsposition, die aber nicht kurzzeitig erfolgt.

Wenn das Fahrzeug mit dem Trittbrett in Ruheposition unbeabsichtigt gegen ein Hindernis fährt, kann durch den Stoß eine Auslenkung aus der Ruheposition erfolgen, bei der eine Aktivierung des Antriebs jedoch nicht erwünscht ist.

Um also eine kurzzeitige Auslenkung aus der Arbeitsposition oder Ruheposition zu ermöglichen und gleichzeitig die für den ordnungsgemäßen Betrieb des Fahrzeugs die vordefinierten Positionen nicht zu beeinträchtigen, ist es vorteilhaft, mit Hilfe von elastischen Mitteln die Plattform wieder in ihre Ausgangsposition zurückzuführen.

Alternativ oder auch gemeinsam damit kann es vorgesehen sein, dass die Plattform derart an dem Rahmen angeordnet ist, dass sie nach der Auslenkung aus der Ruheposition und/oder Arbeitsposition durch die Gewichtskraft wieder in die Ruheposition und/oder Arbeitsposition zurückgeführt wird. Der Vorteil dieser Ausgestaltung besteht in ihrer Einfachheit.

Beide Rückführungsmechanismen können auch kombiniert werden. Am Beispiel einer Auslenkung aus der Arbeitsposition betrachtet könnte eine Auslenkung durch Antippen von oben durch ein elastisches Mittel zurückgeführt werden und eine Auslenkung durch Antippen von untern mit Hilfe der Gewichtskraft.

Insbesondere ist das Trittbrett so ausgestaltet, dass der Antrieb aktivierbar ist, sobald die Plattform eine vorgesehene Aktivierungsposition erreicht hat. Der Antrieb soll nicht bei jeder Erschütterung es Trittbretts ausgelöst werden. Ebenso soll die notwendige Auslenkung nicht zu groß sein, um eine benutzerfreundliche Bedienung zu ermöglichen. Daher ist es sinnvoll, ein Maß für die Auslenkung zu bestimmen, bei dessen Erreichen der Antrieb aktiviert wird.

Besonders bevorzugt ist die Aktivierungsposition eine Auslenkung von 5° bis 15° aus der Ruheposition oder der Arbeitsposition. Weiter bevorzugt ist die Aktivierungsposition eine Auslenkung von 5° bis 8° aus der Ruheposition oder der Arbeitsposition. Hierdurch ist gewährleistet, dass nicht schon kleine Stöße zu einer Aktivierung des Antriebs führen. Gleichzeitig muss der Bediener die Plattform nicht übermäßig weit bewegen, um das automatisierte Schwenken zu aktivieren.

Eine weitere Ausgestaltung der Erfindung sieht vor, dass ein Winkelsensor vorgesehen ist, der die relative Position der Plattform zu dem Rahmen beim Schwenken um die Drehachse bestimmt. Damit lässt sich einfach und präzise die Bewegung und Positionierung der Plattform bestimmen und damit auch die Auslenkung der Plattform aus der Ruheposition oder Arbeitsposition feststellen.

Bevorzugt ist vorgesehen, dass die relative Position der Plattform zu dem Rahmen über den Aktuator bestimmbar ist, und der Antrieb aktivierbar ist, sobald die durch den Aktuator und den Winkelsensor bestimmten relativen Positionen nicht mehr identisch sind.

Die Ruheposition und die Arbeitsposition der Plattform sind vorgegebene Einstellungen für den Antrieb. Auch jede Position dazwischen kann durch den Antrieb, insbesondere in einer Ausgestaltung als Elektromotor, ermittelt werden, da die Bewegung des Aktuators zumindest mittelbar auf die Plattform übertragen wird, um diese zu schwenken. Bei einer kurzzeitigen Auslenkung der Plattform aus Ruheposition oder Arbeitsposition bleibt der Antrieb in Ruhe, es wird keine Bewegung der Plattform registriert. Im Rahmen der oben erwähnten Bewegungsfreiheit der Plattform kann diese aber unabhängig von dem Antrieb bewegt werden, was wiederum von dem Winkelsensor detektiert wird. Der Vergleich der beiden Messwerte zeigt also eine Abweichung auf, die als Aktivierungssignal gewertet wird, woraufhin der Antrieb aktiviert wird.

Weiterhin kann vorgesehen sein, dass Mittel vorgesehen sind, um die Geschwindigkeit der Auslenkung der Plattform zu bestimmen, wobei der Antrieb ab einer vorgesehenen Mindestgeschwindigkeit aktivierbar ist. Dabei kann es sich beispielsweise um einen Geschwindigkeitssensor handeln. Alternativ kann es sich auch um einen Positionssensor beziehungsweise Winkelsensor handeln, wobei die Geschwindigkeit durch Ableitung nach der Zeit aus dessen Messwerten bestimmt wird. Ein Antippen der Plattform zum kurzzeitigen Auslenken, um den Antrieb zu aktivieren ist durch eine relativ schnelle Bewegung der Plattform charakterisiert. Daher kann auch ein entsprechender Messwert als Aktivierungssignal für den Antrieb verwendet werden.

Weiterhin bevorzugt ist zumindest ein, vorzugsweise zylindrisches, Halteelement sowie zumindest eine damit korrespondierende, vorzugsweise kreisbogenförmige, Ausbuchtung in der Plattformhalterung derart vorgesehen, dass das Halteelement in einer Ruheposition oder Arbeitsposition der Plattform in die Ausbuchtung eingreift, so dass die Plattform in der jeweiligen Position festgelegt ist.

Die Plattform soll einerseits fest in der Ruheposition und/oder in der Arbeitsposition gehalten werden, damit sie nicht bei kleinen Erschütterungen aus der jeweiligen Position gerissen wird. Andererseits soll der entsprechende Widerstand durch den Antrieb leicht überwunden werden. Diese Vorgaben werden erfindungsgemäß durch Halteelemente im Zusammenspiel mit geeigneter Formgebung des Trittbretts erreicht. Vorteilhafterweise sind die Halteelemente elastisch. Dabei wird eine kompakte Bauweise erreicht und es sind keine von Hand zu bedienenden Verriegelungen notwendig.

Die nachfolgenden Figuren verdeutlichen die Erfindung anhand eines Ausführungsbeispiels. Es zeigen
- Figur 1: ein Trittbrett
- Figur 2: eine Schnittdarstellung des Trittbretts in Arbeitsposition
- Figur 3: eine Schnittdarstellung des Trittbretts in Ruheposition
- Figur 4: eine Explosionsdarstellung des Trittbretts
- Figur 5: eine weitere Schnittdarstellung des Trittbretts in Arbeitsposition
- Figur 6: eine weitere Schnittdarstellung des Trittbretts in Ruheposition.

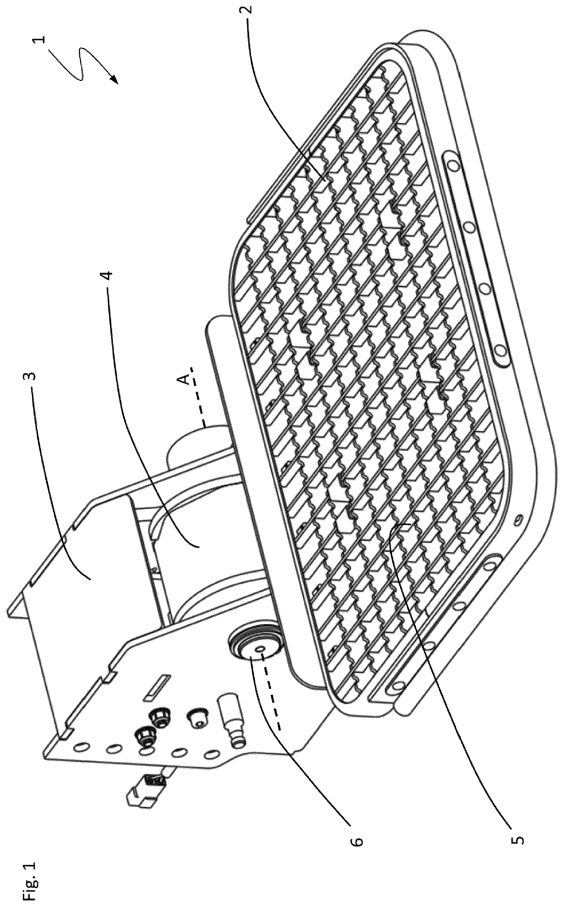

In Fig. 1 ist ein Trittbrett 1 dargestellt, das insbesondere für ein Abfallsammelfahrzeug geeignet ist. Das Trittbrett 1 weist eine Plattform 2 und einen Rahmen 3 auf, wobei die Plattform 2 mit einer Plattformhalterung 4 an dem Rahmen 2 gehalten ist. Die Plattform 2 ist an dem Rahmen 3 um eine Drehachse A schwenkbar gelagert und kann eine Mehrzahl von festgelegten Positionen einnehmen. Die relative Position der Plattform 2 zu dem Rahmen 3 ist beim Schwenken um die Drehachse A bestimmbar.

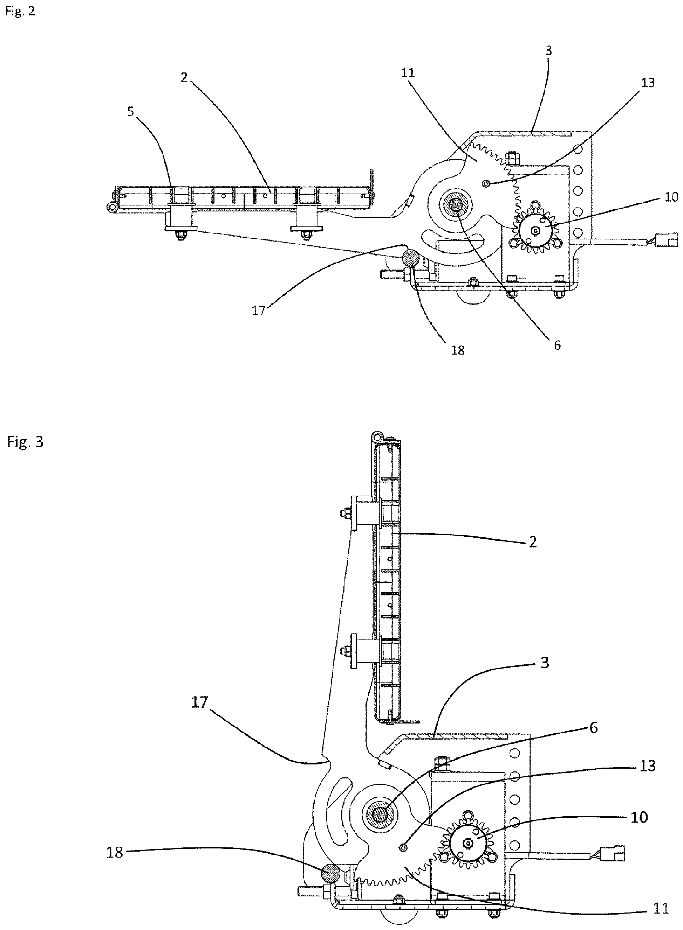

Das Trittbrett 1 nimmt zwei Grundpositionen ein. In Fig. 1 und Fig. 2 ist das Trittbrett 1 in der Arbeitsposition zu sehen. Fig. 3 zeigt es in der Ruheposition. In der Ruheposition ist die Plattform 2 beziehungsweise deren Standfläche 5 nicht durch Personen betretbar, da sie dann im Wesentlichen senkrecht nach oben ausgerichtet ist. In der Arbeitsposition kann die Plattform 2 von Personen betreten werden. Die Plattform 2 ist mittels einer Plattformhalterung 4 an einem Rahmen 3 befestigt, der wiederum mit dem Fahrzeug verbunden werden kann.

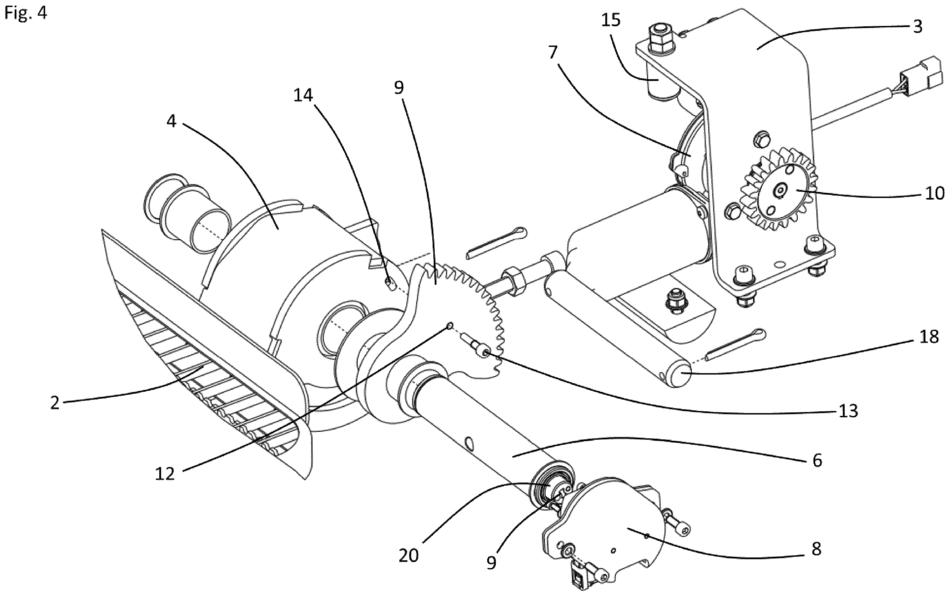

Die Plattform 2 ist an einer Drehwelle 6 schwenkbar um die Drehachse A gelagert. Es ist ein Elektromotor 7 als Antrieb vorgesehen, der die Plattform 2 in die jeweilige Position schwenkt und in der Explosionsdarstellung in Fig. 4 dargestellt ist. Dadurch entfällt eine manuelle Betätigung der Plattform 2 des Trittbretts 1.

Das kurzzeitige Auslenken der Plattform 2 aus der Ruheposition oder der Arbeitsposition erfolgt beispielsweise durch ein Antippen der Plattform 2 mit dem Fuß. Die kurzzeitige Auslenkung wird über einen Winkelsensor 8 registriert, der an einem axialen Ende der Drehwelle 6 angebracht ist. Daraufhin wird der Elektromotor 7 aktiviert und damit die Plattform 2 bewegt. In der Drehwelle 6 ist an deren, dem Winkelsensor 8 zugewandten axialen Ende ein Magnet 9, dessen Magnetfeld bei der Schwenkbewegung der Plattform 2 ebenfalls dreht. Diese Magnetfeldänderung wird durch den Winkelsensor 8 detektiert.

Der Elektromotor treibt das Zahnrad 10 an, das wiederum in das Zahnradelement 11 eingreift. Beide bilden ein Zahnradgetriebe, wobei das Zahnrad 10 auch ein anderes Zahnelement sein könnte. Das Zahnradelement 11 selbst ist mit der Drehwelle 6 verbunden, um diese zu bewegen. Weiterhin weist das Zahnradelement 11 einen Durchbruch 12 auf, der von einem Zapfen 13 durchgriffen wird. Der Zapfen 13 greift in eine Tasche 14 in der Plattformhalterung 4 ein. Die Tasche 14 weist eine kreisbogenförmige Kontur auf. Diese Anordnung ist in der Explosionsdarstellung des Trittbretts 1 in Fig. 4 zu erkennen. Auf diese Weise wird die Drehbewegung des Zahnradelements 11 auf die Plattformhalterung 4 und damit auf die Plattform 2 übertragen und diese bewegt. Durch die kreisbogenförmige Gestaltung der Tasche 14 hat die hat die Plattform 2 Spiel in ihrer Schwenkbarkeit, so dass ein Müllwerker die Plattform 2 betreten und diese in eine besetzte Position bringen kann, ohne dass der Elektromotor 7 dafür belastet wird. Gleichermaßen wird dieses Spiel in der Schwenkbarkeit für die kurzzeitige Auslenkung zum Auslösen der Schwenkbewegung genutzt.

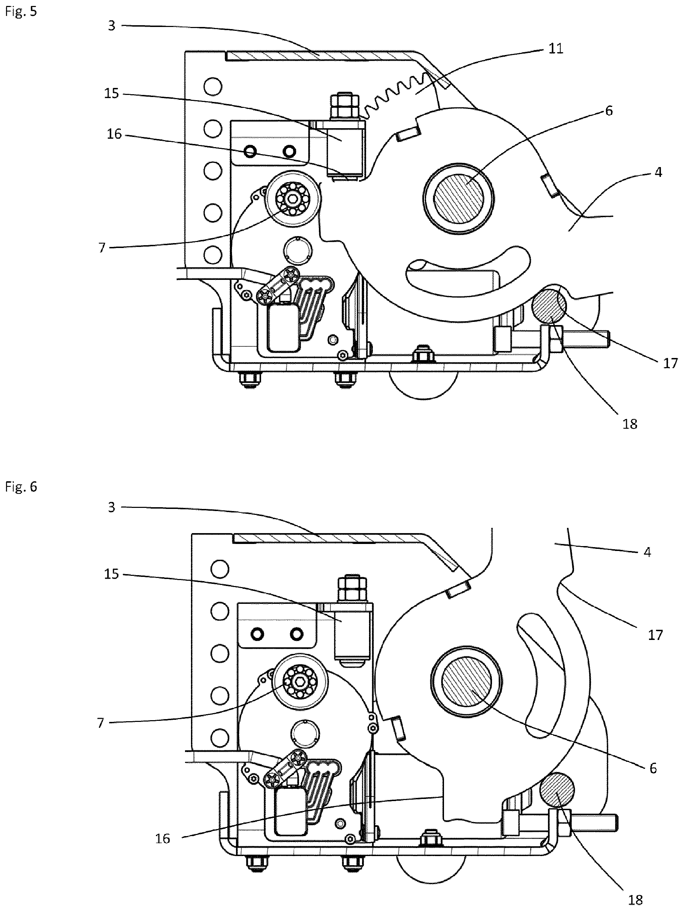

In der Arbeitsposition kann der Bediener die Plattform 2 nach oben oder nach unten kurzzeitig auslenken, in dem er mit dem Fuß kurz auf die Standfläche 5 tritt oder die Plattform 2 nach oben lupft. In letzterem Fall sorgt die Schwerkraft dafür, dass die Plattform 2 wieder in die Arbeitsposition zurückkehrt. Um die Plattform 2 auch beim Treten auf die Standfläche 5 zurück in die Arbeitsposition zu bewegen, ist eine Federelement 15 vorgesehen (Fig. 5 und 6). Das Federelement 15 dient als Anschlag für die Plattformhalterung 4, die mit einer Konsole 16 in der Arbeitsposition an dem Federelement 15 anliegt, das beispielsweise ein Elastomerelement, eine Spiralfeder oder eine Gasfeder sein kann.

Tritt nun der Bediener auf die Plattform 2, so wird diese nach unten zur Fahrbahn hin geschwenkt. Das Federelement 15 wird dabei gespannt. Nimmt der Bediener seinen Fuß wieder von der Plattform 2, so wird diese durch die Rückstellkraft des Federelements 15 zurück in die Arbeitsposition gebracht. Diese kurzzeitige Auslenkung aus der Arbeitsposition wird durch den Winkelsensor 8 detektiert. Gleichzeitig registriert aber der Elektromotor 7 keine Bewegung der Plattform 2, da diese wie vorstehend beschrieben ein gewisses Spiel in ihrer Schwenkbarkeit hat. Dies wird als Auslösesignal für den Elektromotor 7 gewertet. Dieser wird aktiviert und die Plattform 2 schwenkt in die Ruheposition. Das Schwenken von der Ruheposition in die Arbeitsposition erfolgt in analoger Weise.

Dies geschieht aber nur, wenn die Plattform 2 weit genug ausgelenkt wird, also eine bestimmte Aktivierungsposition erreicht. Als Aktivierungsposition ist eine Auslenkung von 5° bis 15°, bevorzugt 5° bis 8°, aus der Ruheposition oder der Arbeitsposition vorgesehen. Hierdurch ist gewährleistet, dass nicht schon kleine Stöße zu einer Aktivierung des Elektromotors 7 führen. Gleichzeitig muss der Bediener die Plattform 2 nicht übermäßig weit bewegen, um das automatisierte Schwenken zu aktivieren.

Weiterhin erfolgt die Aktivierung des Elektromotors 7 nur dann, wenn das kurzzeitige Auslenken mit einer festgelegten Mindestgeschwindigkeit erfolgt. Die Geschwindigkeit kann in einfacher Weise aus den Messwerten des Winkelsensors 8 gewonnen werden.

Die Plattformhalterung 4 weist zudem eine Ausbuchtung 17 auf, in die das Halteelement 18 eingreift, sobald die Plattform 2 sich in der Arbeitsposition befindet. Dadurch wird gewährleistet, dass die Plattform 2 stabil in ihrer Arbeitsposition bleibt und nicht durch kleine Erschütterungen aus ihrer Position gerissen wird.

### Bezugszeichen

- 1: Trittbrett
- 2: Plattform
- 3: Rahmen
- 4: Plattformhalterung
- 5: Standfläche
- 6: Drehwelle
- 7: Elektromotor
- 8: Winkelsensor
- 9: Magnet
- 10: Zahnrad
- 11: Zahnradelement
- 12: Durchbruch
- 13: Zapfen
- 14: Tasche
- 15: Federelement
- 16: Konsole
- 17: Ausbuchtung
- 18: Halteelement
- A: Drehachse

## Patentansprüche

1. Trittbrett (1), insbesondere für ein Abfallsammelfahrzeug, mit einer Plattform (2) und einem Rahmen (3), wobei die Plattform (2) an dem Rahmen (3) um eine Drehachse schwenkbar gelagert ist, so dass sie eine Ruheposition und eine Arbeitsposition einnehmen kann, wobei die Plattform (2) durch einen Antrieb von der Ruheposition in die Arbeitsposition und umgekehrt bringbar ist, wobei der Antrieb automatisch aktivierbar ist, indem die Plattform (2) kurzzeitig aus ihrer Ruheposition oder Arbeitsposition ausgelenkt wird, wobei als Antrieb ein Aktuator mit einem Zahnradgetriebe vorgesehen ist und das Zahnradgetriebe zumindest ein Zahnradelement (11) aufweist, das mit einer Drehwelle (6) zum Schwenken der Plattform (2) verbunden ist, um diese zu bewegen **dadurch gekennzeichnet, dass** das Zahnradelement (11) einen Durchbruch (12) aufweist, der von einem Zapfen (13) durchgriffen ist und der in eine korrespondierende Tasche (14) in einer Plattformhalterung (4) eingreift, wobei der Durchbruch (12) und/oder die Tasche (14) eine kreisbogenförmige Gestalt hat.

2. Trittbrett (1) nach Anspruch 1 **dadurch gekennzeichnet, dass** elastische Mittel vorgesehen sind, die die Plattform (2) nach der Auslenkung aus der Ruheposition und/oder Arbeitsposition mittels Federkraft wieder in die Ruheposition und/oder Arbeitsposition zurückführen.

3. Trittbrett (1) nach Anspruch 2 **dadurch gekennzeichnet, dass** als elastisches Mittel zumindest ein Federelement (15) vorgesehen ist, das in der Ruheposition und/oder Arbeitsposition als Anschlag wirkt und beim kurzzeitigen Auslenken gespannt wird, so dass die Plattform (2) durch die Rückstellkraft wieder in die Ruheposition und/oder Arbeitsposition bewegbar ist, sobald die Plattform (2) entlastet wird.

4. Trittbrett (1) nach zumindest einem der vorstehenden Ansprüche **dadurch gekennzeichnet, dass** die Plattform (2) derart an dem Rahmen (3) angeordnet ist, dass sie nach der Auslenkung aus der Ruheposition und/oder Arbeitsposition durch die Gewichtskraft wieder in die Ruheposition und/oder Arbeitsposition zurückgeführt wird.

5. Trittbrett (1) nach zumindest einem der vorstehenden Ansprüche **dadurch gekennzeichnet, dass** der Antrieb aktivierbar ist, sobald die Plattform (2) eine vorgesehene Aktivierungsposition erreicht hat.

6. Trittbrett (1) nach Anspruch 5 **dadurch gekennzeichnet, dass** die Aktivierungsposition eine Auslenkung von 5° bis 15° aus der Ruheposition oder der Arbeitsposition ist.

7. Trittbrett (1) nach zumindest einem der vorstehenden Ansprüche **dadurch gekennzeichnet, dass** ein Winkelsensor (8) vorgesehen ist, der die relative Position der Plattform (2) zu dem Rahmen (3) beim Schwenken um die Drehachse bestimmt.

8. Trittbrett (1) nach Anspruch 7 **dadurch gekennzeichnet, dass** die relative Position der Plattform (2) zu dem Rahmen (3) über den Antrieb bestimmbar ist, und der Antrieb aktivierbar ist, sobald die durch den Antrieb und den Winkelsensor (8) bestimmten relativen Positionen nicht mehr identisch sind.

9. Trittbrett (1) nach zumindest einem der vorstehenden Ansprüche **dadurch gekennzeichnet, dass** Mittel vorgesehen sind, um die Geschwindigkeit der Auslenkung der Plattform (2) zu bestimmen, wobei der Antrieb ab einer vorgesehenen Mindestgeschwindigkeit aktivierbar ist.

10. Trittbrett (1) nach zumindest einem der vorstehenden Ansprüche **dadurch gekennzeichnet, dass** zumindest ein, vorzugsweise zylindrisches, Halteelement (18) sowie zumindest eine damit korrespondierende, vorzugsweise kreisbogenförmige, Ausbuchtung (17) in der Plattformhalterung (4) derart vorgesehen ist, dass das Halteelement (18) in einer Ruheposition oder Arbeitsposition der Plattform (2) in die Ausbuchtung (17) eingreift, so dass die Plattform (2) in der jeweiligen Position festgelegt ist.

## Claims

1. Footboard (1), in particular for a garbage truck, comprising a platform (2) and a frame (3), the platform (2) being mounted on the frame (3) so as to be pivotable about an axis of rotation so that it can assume a rest position and a working position, the platform (2) being movable from the rest position to the working position and vice versa by a drive, the drive being automatically activable by the platform (2) being briefly deflected from its rest position or working position, an actuator that has a gear transmission being provided as the drive, and the gear transmission having at least one gear element (11) which is connected to a rotary shaft (6) for pivoting the platform (2) in order to move said platform, **characterized in that** the gear element (11) has an opening (12) through which a pin (13) passes and which engages in a corresponding pocket (14) in a platform holder (4), the opening (12) and/or the pocket (14) having a circular arc shape.

2. Footboard (1) according to claim 1, **characterized in that** resilient means are provided which return the platform (2) to the rest position and/or working position by means of spring force after the deflection from the rest position and/or working position.

3. Footboard (1) according to claim 2, **characterized in that** at least one spring element (15) is provided as a resilient means, which acts as a stop in the rest position and/or working position and is tensioned during the brief deflection, so that the platform (2) can be moved back into the rest position and/or working position by the restoring force as soon as the platform (2) is relieved of load.

4. Footboard (1) according to at least one of the preceding claims, **characterized in that** the platform (2) is arranged on the frame (3) in such a way that after being deflected from the rest position and/or working position, it is returned to the rest position and/or working position by the force of weight.

5. Footboard (1) according to at least one of the preceding claims, **characterized in that** the drive can be activated as soon as the platform (2) has reached a designated activation position.

6. Footboard (1) according to claim 5, **characterized in that** the activation position is a deflection of 5° to 15° from the rest position or the working position.

7. Footboard (1) according to at least one of the preceding claims, **characterized in that** an angle sensor (8) is provided which determines the relative position of the platform (2) to the frame (3) when pivoting about the axis of rotation.

8. Footboard (1) according to claim 7, **characterized in that** the relative position of the platform (2) to the frame (3) can be determined via the drive, and the drive can be activated as soon as the relative positions determined by the drive and the angle sensor (8) are no longer identical.

9. Footboard (1) according to at least one of the preceding claims, **characterized in that** means are provided to determine the speed of the deflection of the platform (2), the drive being activable from a predetermined minimum speed.

10. Footboard (1) according to at least one of the preceding claims, **characterized in that** at least one preferably cylindrical holding element (18) and at least one corresponding preferably circular-arc-shaped indentation (17) is provided in the platform holder (4) such that the holding element (18) engages in the indentation (17) in a rest position or working position of the platform (2), so that the platform (2) is fixed in the particular position.

## Revendications

1. Marchepied (1), en particulier pour un véhicule de collecte de déchets, comportant une plateforme (2) et un cadre (3), dans lequel la plateforme (2) est montée sur le cadre (3) de manière à pouvoir pivoter autour d'un axe de rotation, de sorte qu'elle peut occuper une position de repos et une position de travail, dans lequel la plateforme (2) peut être amenée par un entraînement de la position de repos à la position de travail et inversement, dans lequel l'entraînement peut être activé automatiquement en faisant dévier brièvement la plateforme (2) à partir de sa position de repos ou de sa position de travail, dans lequel un actionneur comportant une transmission par engrenages est prévu comme entraînement et la transmission par engrenages présente au moins un élément formant roue dentée (11) relié à un arbre de rotation (6) pour le pivotement de la plateforme (2) afin de déplacer celle-ci, **caractérisé en ce que** l'élément formant roue dentée (11) présente un passage (12) traversé par un tenon (13) et venant en prise dans un compartiment (14) correspondant dans un dispositif de maintien pour plateforme (4), dans lequel le passage (12) et/ou le compartiment (14) possèdent une forme d'arc de cercle.

2. Marchepied (1) selon la revendication 1, **caractérisé en ce que** des moyens élastiques sont prévus, lesquels ramènent la plateforme (2) dans la position de repos et/ou dans la position de travail au moyen d'une force élastique après la déviation à partir de la position de repos et/ou de la position de travail.

3. Marchepied (1) selon la revendication 2, **caractérisé en ce qu'**au moins un élément à ressort (15) est prévu comme moyen élastique, lequel agit comme butée dans la position de repos et/ou dans la position de travail et est tendu lors d'une brève déviation, de sorte que la plateforme (2) peut être à nouveau déplacée dans la position de repos et/ou dans la position de travail par la force de rappel dès que la plateforme (2) est libérée.

4. Marchepied (1) selon au moins l'une des revendications précédentes, **caractérisé en ce que** la plateforme (2) est disposée sur le cadre (3) de telle sorte qu'elle est ramenée dans la position de repos et/ou dans la position de travail par la force de poids après la déviation à partir de la position de repos et/ou de la position de travail.

5. Marchepied (1) selon au moins l'une des revendications précédentes, **caractérisé en ce que** l'entraînement peut être activé dès que la plateforme (2) a atteint une position d'activation prévue.

6. Marchepied (1) selon la revendication 5, **caractérisé en ce que** la position d'activation est une déviation allant de 5° à 15° par rapport à la position de repos ou à la position de travail.

7. Marchepied (1) selon au moins l'une des revendications précédentes, **caractérisé en ce qu'**un capteur d'angle (8) est prévu, lequel détermine la position relative de la plateforme (2) par rapport au cadre (3) lors du pivotement autour de l'axe de rotation.

8. Marchepied (1) selon la revendication 7, **caractérisé en ce que** la position relative de la plateforme (2) par rapport au cadre (3) peut être déterminée par l'intermédiaire de l'entraînement et l'entraînement peut être activé dès que les positions relatives déterminées par l'entraînement et le capteur d'angle (8) ne sont plus identiques.

9. Marchepied (1) selon au moins l'une des revendications précédentes, **caractérisé en ce que** des moyens sont prévus pour déterminer la vitesse de la déviation de la plateforme (2), dans lequel l'entraînement peut être activé à partir d'une vitesse minimale prévue.

10. Marchepied (1) selon au moins l'une des revendications précédentes, **caractérisé en ce qu'**au moins un élément de maintien (18), de préférence cylindrique, ainsi qu'au moins une courbure (17) correspondant à celui-ci, de préférence en forme d'arc de cercle, sont prévus dans le dispositif de maintien pour plateforme (4) de telle sorte que l'élément de maintien (18) vient en prise dans la courbure (17) dans une position de repos ou dans une position de travail de la plateforme (2), de sorte que la plateforme (2) est fixée dans la position respective.
